# NEUE EUROPÄISCHE PATENTSCHRIFT

(11) **EP 0 696 140 B2**
(45) Veröffentlichungstag und Bekanntmachung des Hinweises auf die Entscheidung über den Einspruch: **10.05.2006**
(45) Hinweis auf die Patenterteilung: 14.08.2002
(21) Anmeldenummer: 95202026.1
(22) Anmeldetag: 28.06.1995
(51) Int. Cl.: H04N 5/92

(54) **Verfahren zum Speichern von Zusatzinformationen, die mit einem Signal übermittelt werden**
Procedure for storing supplemental information, which is transmitted with a signal
Procédé pour emmagasiner des informations supplémentaires, qui sont transmises ensemble avec un signal

(30) Priorität: 03.08.1994 DE 4427397
(43) Veröffentlichungstag der Anmeldung: 07.02.1996
(73) Patentinhaber: DEUTSCHE THOMSON-BRANDT GMBH, 78048 Villingen-Schwenningen (DE)
(72) Erfinder: Kaaden, Jürgen, D-78052 Villingen-Schwenningen (DE)

(56) Entgegenhaltungen:
- WO-A-90/10351

## Beschreibung

Die Erfindung geht aus von einem Verfahren zum Speichern von Zusatzinformation, die mit einem Signal übermittelt werden, gemäß dem Oberbegriff des Anspruchs 1.

Wenn Videoinformationen aufgezeichnet wurden, fällt es nach einiger Zeit schwer, sich an den Inhalt zu erinnem, insbesondere wenn die Kassette/Disk unbeschriftet ist. Neuere Systeme nutzen einen Speicher, in dem der Benutzer Informationen ablegen kann, die nach Eingabe einer Nummer oder nach Einlegen des Mediums in das Abspielgerät angezeigt werden. Nachteilig hierbei ist, daß der Benutzer aktiv werden, und die speziellen Eingaben per Fembedienung oder angeschlossenem PC durchführen muß. Neuere digitale Aufzeichnungsgeräte werden einen Langzeitaufzeichnungsbetrieb beinhalten (24h bis 72h Aufzeichnung), bei dem der Benutzer nachträglich das ihn interessierende Programm schwer finden kann.

Die WO-A-90/10351 beschreibt die Extraktion von programmrelevanten Daten aus einem Fernsehtextsignal und ihre Aufzeichnung auf einem Videoband zusammen mit dem aufzuzeichnenden Sendebeitrag. Bei der Wiedergabe der Aufzeichnungen stehen diese Videotextdaten dann zur Verfügung. Die Aufzeichnung der Zusatzdaten erfolgt synchron mit den Videodaten, so daß eine Information über den Titel erst dann abgerufen werden kann, wenn die Aufzeichnung mit diesem Titel wiedergegeben wird. Eine tabellarische Anzeige des Inhalts eines Bandes ist damit nicht möglich. Vielmehr muß zunächst zu dem jeweiligen Film vorgespult werden, wobei keine Information darüber vorliegt, an welcher Stelle auf dem Band dieser Film beginnt. Erst bei Wiedergabe des Filmes wird dann der Titel angezeigt und somit der Benutzer darüber informiert, welcher Beitrag dargestellt wird.

Der Erfindung liegt die Aufgabe zugrunde, ein Verfahren zum Speichern von Zusatzinformationen, die mit einem Signal übermittelt werden, zu schaffen. Diese Aufgabe wird durch die im Anspruch 1 angegebenen Merkmale der Erfindung gelöst. Vorteilhafte Weiterbildungen der Erfindung sind in den Unteransprüchen angegeben.

Erfindungsgemäß wird ein Videoaufzeichnungsgerät mit einem Speicherfürdas Aufzeichnen von Programminformationen ausgestattet. Das erstellte Verzeichnis wird insbesondere TOC-Verzeichnis (TOC= table of content= tabellarische Anordnung des Inhaltes) genannt. Ferner sind diese Geräte mit Videotextdekoder ausgestattet und vorzugsweise VPS programmierbar. Die VPS Kodierung enthält die Anfangszeit einer Sendung. Eine Kurzinformation über die Sendung erfolgt in der Programmübersicht. In dieser Übersicht sind eventuell weitergehende Beschreibungen auf anderen Seiten genannt.

Ausgehend von der VPS Programmierung einer Aufzeichnung (unter Einschluß des neuen "Show View" Systems mit Eingabe einer Nummernkombination), mit der die Anfangszeit definiert gesetzt wird, erfolgt ein Aufruf der zugehörigen Videotextprogrammübersichtsseite, deren programmbezogener Inhalt abgespeichert wird. Weitere Informationen, die als Seitenangabe in der Übersichtsseite genannt sind und programmrelevant sind, werden automatisch mitabgespeichert. Je nach Einstellung wird entweder die Information der Übersichtsseite gespeichert und/oder die Information der weiter ausführenden Seite(n). Die Abspeicherung der programmbezogenen Daten im kassettenspezifischen Speicher erfolgt während, vor oder nach der Aufzeichnung, jedoch vorzugsweise bevor die nächste programmierte Information aufgezeichnet wird.

Bei Aufruf der Kassette/Disk (Einlegen oder Nr. eingeben oder an ein separates Lesegerät anschließen) erfolgt die Anzeige des Inhaltes. Weitere Informationen wie Aufzeichnungstag, Programm und verbleibende Aufzeichnungsdauer können erfindungsgemäß mit angezeigt werden.

Die Art des Speichers ist variabel. Es kommen Halbleiterspeicher in der Kassette oder im Gerät in Betracht. Die Information kann ebenfalls in der Aufzeichnungsebene (z.B. vertikale Austastlücke) abgespeichert werden.

Das System ist erfindungsgemäß ebenfalls anwendbar auf neue digitale Übertragungssysteme, sofern programmspezifische Textoder Grafikinformationen mitgeliefert werden. Erfindungsgemäß werden bei einer Langzeitaufzeichnung in Kombination mit solchen neuen Übertragungssystemen automatisch die zur Verfügung stehenden Textinformationen sowie die Positionsinformationsdaten (Zeit/Ort) der aufgezeichneten Programme abgespeichert. Bei der Auswahl kann dann nach Suchkriterien ein- bzw. ausgeblendet werden.

Auf diese Art ist es möglich, gezielt z.B. nach Magazin-, Nachrichtensendungen oder Unterhaltung zu suchen bzw. nur diese Informationen zur Anzeige zu bringen. Für interaktives Fernsehen wird damit das Suchen nach bestimmten Nachrichten Datenfiles, Faxen, Bestellunterlagen usw. stark vereinfacht.

Das Aufzeichnungsgerät für Videosignale weist erfindungsgemäß einem Videtextdekoder und/oder einem VPS Dekoder, sowie einem Kassetten/Disk-spezifischen Speicherauf, dersich entweder in der Kassette, im Gerät oder auf dem Band/der Disk befindet.

Alle programmzugehörigen Videotextdaten werden auf dem Kassetten/Disk-spezifischen Speicher abgelegt. Der Kassetten/Disk-spezifische Speicher ist ein Halbleiterspeicher in der Kassette oder im Gerät. Die Speicherung wird im Daten-/Subcode-/Austastlücken-Aufzeichnungsbereich vorgenommen. Ausgehend von der programmierten Anfangszeit wird der Inhalt aller zugehörigen Videotextseiten abgespeichert.

Es werden die Zusammenfassung aus den Programmübersichtsseiten abgespeichert und alle in derVideotextinformation genannten Seitenverweise als Adresseninformationen für die weitere Speicherung ausgewertet. Der Videotextdekoder empfängt nacheinander die einzelnen Seiten, adressiert diese und speichert die zugehörigen Programminhalte als auch die programmrelevanten Teile der vom Videotextdekoder in einem Vielseitenspeicher parallel bereitgestellten Information in den Kassetten/Disk-spezifischen Speicher ab.

Es werden die Schriftcharaktere und/oder die Nummer/Adresse des Schriftcharakters übernommen. Weiterhin sind vorzugsweise alle, auch grafische Symbole zu übernehmen. Die Information wird in einer Übersicht nach Einlegen der Kassette dargestellt. Der im Gerät befindliche Kassetten/Disk-spezifische Speicher gibt nach manueller oder automatischer Eingabe einer Kassetten/Disk-Nummer die für diese Kassette/Disk relevanten Daten aus. Ohne Einlegen der Kassette ist es möglich, daß mit Hilfe eines separaten Lesegerätes der Halbleiterspeicher aller kontaktierten Kassetten ausgelesen wird.

Die Erfindung wird im folgenden anhand der Zeichnungen erläutert. Darin zeigen:
- Fig. 1: Bildschirminhalt und
- Fig. 2: das Verfahren zur Gewinnung der Informationen.

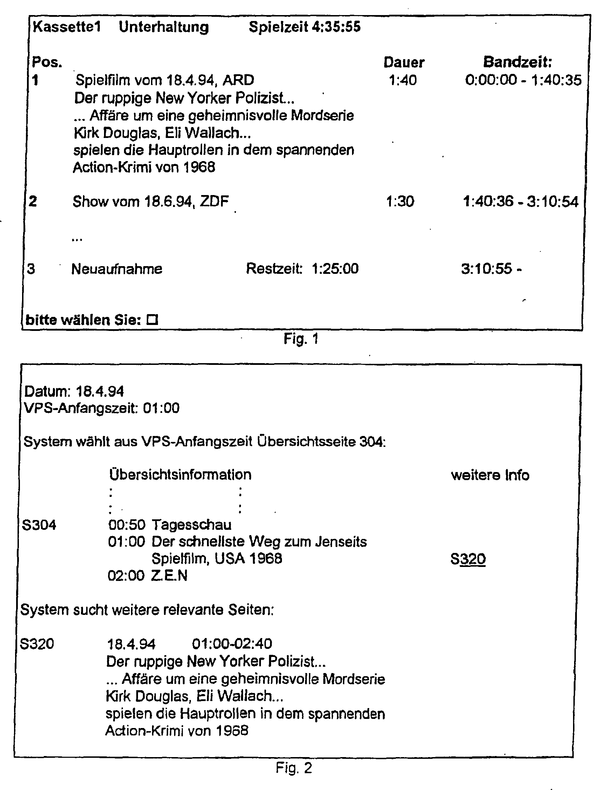

Fig. 1 zeigt den Bildschirminhalt eines Speichermedium. In diesem Falle ist das Speichermedium die Kassette 1. Auf dieser Kassette befinden sich Filme aus der Rubrik Unterhaltung. Die Kassette verfügt über eine Spielzeit von 4:35:55. Mit Positionsnummern werden die Aufnahmen durchnumeriert. Zu jeder Aufnahme wird die Information aus den entsprechenden Teletextseiten abgespeichert. Weiterhin wird die Dauer der Aufnahme und die Bandzeit angezeigt. Für eine Neuaufnahme wird eine Positionsnummer reserviert und die Restbandzeit angezeigt. Der Benutzer kann mit derentsprechenden Positionsnummer den gewünschten Film auswählen. Bei einer Neuaufnahme spult das Gerät bis zum Ende der letzten Aufnahme vor, wenn keine andere Position vom Benutzer vorgegeben wird.

Fig. 2 stellt die Verfahrensweise dar, wie die Informationen, die in Fig. 1 dargestellt sind, gewonnen werden. Der Bediener gibt die relevanten Daten für die Aufzeichnung ein. In diesem Fall das Datum "18.04.94" und die VPS-Anfangszeit "01:00". Das System wählt aus der VPS-Anfangszeit die Übersichtsseite "S304" aus. In der Übersichtsseite "S304" ist unter der Anfangszeit "01:00" die Information "Der schnellste Weg zum Jenseits, Spielfilm, USA 1968" zu entnehmen. Weiterhin ist auch auf die Seite "S320" verwiesen, die noch mehr Informationen über den Spielfilm enthält. Das System sucht die Seite "S320". Hierunter befinden sich die Angaben des Datums der Aufnahme "18.04.94" die Dauerdes Spielfilms "01:00 - 02:14" und zusätzliche Informationen über den Inhalt dieses Spielfilmes "Der ruppige New Yorker Polizist ... ... Action-Krimi von 1968". Je nach programmierter Betriebsart (Übersicht/Detailinformation) wird entweder der Bereich Übersichtinformation oder der Bereich Detailinformation oder beides abgespeichert und mit der Restzeit, sowie Bandzeitinformation versehen.

## Patentansprüche

1. Verfahren zur Verwaltung von aufgezeichneten Fernsehsendungen, wobei die Fernsehsendungen auf einem Aufzeichnungsträger, insbesondere einer Magnetbandkasette oder Disk oder einem Halbleiterspeicher aufgezeichnet sind und wobei Programminformationen, insbesondere die Titel der aufgezeichneten Fernsehsendungen, aus Videotextdaten entnommen werden und diese Programminformationen abgespeichert werden, **dadurch gekennzeichnet, daß** die Programminformationen in einem stationären Speicher eines Videoaufzeichnungsgerätes abgelegt werden und zur Erstellung einer Übersicht der aufgezeichneten Fernsehsendungen genutzt werden, welche ohne Wiedergabe der aufgezeichneten Fernsehsendungen angezeigt werden kann, wobei die Übersicht die Titel der aufgezeichneten Fernsehsendungen sowie Detailinformationen mit zusätzlichen Informationen über den Inhalt der aufgezeichneten Fernsehsendungen enthält und wobei die Detailinformationen aus einem Bereich der Videotextdaten entnommen werden, auf den im die Titel enthaltenen Bereich verwiesen wird.

2. Verfahren nach Anspruch 1, **dadurch gekennzeichnet, daß** die Übersicht zum Aufsuchen einer gewünschten Aufzeichnung, einer Programmart, einer bestimmten Nachricht, eines Datenfiles, eines Faxes, einer Bestellunterlage oder eines freien Platzes auf einem Aufzeichnungsträger genutzt wird, wobei Suchkriterien verwendet werden können.

3. Verfahren nach Anspruch 1 oder 2, **dadurch gekennzeichnet, daß** die Programminformationen durch manuelle Eingaben ergänzt werden können.

4. Verfahren nach einem der vorhergehenden Ansprüche, **dadurch gekennzeichnet, daß** eine Kurzinformation über eine Fernsehsendung aus einer Programmübersichtsseite sowie weitere Informationen, die mittels einer Seitenangabe in der Programmübersichtsseite genannt und programmrelevant sind, abgespeichert werden.

5. Verfahren nach einem der vorhergehenden Ansprüche, **dadurch gekennzeichnet, daß** die Anzeige der Übersicht eines Aufzeichnungsträgers durch Auswahl einer dem Aufzeichnungsträger zugeordneten Nummer oder durch Einlegen eines Aufzeichnungsträgers erfolgt.

6. Verfahren nach einem der vorhergehenden Ansprüche, **dadurch gekennzeichnet, daß** die Übersicht außerdem eine oder mehrere der folgenden Angaben enthält:
Positionsnummern;
Programmart;
Datum;
Sender;
Dauer;
Bandzeit;
verbleibende Restzeit.

7. Vorrichtung zur Durchführung des Verfahrens nach Anspruch 1.

## Claims

1. Method for managing recorded television broadcasts, the television broadcasts being recorded on a recording medium, in particular a magnetic tape cassette or disk or a semiconductor memory, and programme information items, in particular the titles of the recorded television broadcasts, being taken from teletext data and these programme information items being stored, **characterized in that** the programme information items are stored in a stationary memory of a video recording apparatus and are utilized for creating an overview of the recorded television broadcasts which can be displayed without reproduction of the recorded television broadcasts, the overview containing the titles of the recorded television broadcasts and also detailed information on the recorded television broadcasts.

2. Method according to Claim 1, **characterized in that** the overview is utilized for searching for a desired recording, a type of programme, a specific message, a data file, a fax, an order document or a free space on recording medium, search criteria being able to be used.

3. Method according to Claim 1 or 2, **characterized in that** programme information items can be supplemented by manual entries.

4. Method according to one of the preceding claims, **characterized in that** a short information item about a television broadcast from a programme overview page and also further information items which are mentioned by means of a page indication in the programme overview page and are programme-relevant are stored.

5. Method according to one of the preceding claims, **characterized in that** the overview of a recording medium is displayed by selection of a number assigned to the recording medium or by insertion of a recording medium.

6. Method according to one of the preceding claims, **characterized in that** the overview additionally contains one or more the following particulars:
position numbers;
type of programme;
date;
broadcaster;
duration;
tape time;
time remaining.

7. Device for carrying out the method according to Claim

## Revendications

1. Procédé de gestion d'émissions de télévision enregistrées dans lequel les émissions de télévision sont enregistrées sur un support d'enregistrement, notamment une cassette à bande magnétique, un disque ou une mémoire à semiconducteurs et dans lequel des informations relatives aux programmes, notamment le titre des émissions de télévision enregistrées, sont extraites de données vidéotexte et mémorisées, **caractérisé en ce que** les informations relatives aux programmes sont placées dans une mémoire fixe d'un appareil d'enregistrement vidéo et utilisées pour la constitution d'une vue d'ensemble des émissions de télévision enregistrées, qui peut être affichée sans reproduction des émissions de télévision enregistrées, où la vue d'ensemble comporte le titre et des informations détaillées se rapportant aux émissions de télévision enregistrées.

2. Procédé conforme à la revendication 1, **caractérisé en ce que** la vue d'ensemble peut être utilisée pour rechercher un enregistrement souhaité, un type de programme, une information donnée, un fichier de données, un fax, un document de commande ou un espace libre sur le support d'enregistrement, et dans lequel des critères de recherche peuvent être utilisés.

3. Procédé conforme à la revendication 1 ou 2, **caractérisé en ce que** les informations relatives aux programmes peuvent être complétées par saisie manuelle.

4. Procédé conforme à l'une des revendications précédentes, **caractérisé en ce que** de brèves informations sur une émission de télévision issues d'une page de vue générale de programme et d'autres informations relatives au programme mentionnées à l'aide d'une indication de page dans la page de vue générale de programme sont mémorisées.

5. Procédé conforme à l'une des revendications précédentes, **caractérisé en ce que** l'affichage de la vue générale d'un support d'enregistrement s'effectue via la sélection d'un numéro affecté au support ou l'insertion d'un support d'enregistrement.

6. Procédé conforme à l'une des revendications précédentes, **caractérisé en ce que** la vue générale comporte également l'une ou plusieurs des données suivantes :
Numéros de position
Type de programme
Date
Emetteur
Durée
Espace occupé de la bande
Temps restant

7. Dispositif pour l'exécution du procédé conforme à la revendication 1.
